# EUROPEAN PATENT SPECIFICATION

(11) **EP 0 544 904 B1**
(45) Date of publication and mention of the grant of the patent: **16.10.1996**
(21) Application number: 91910629.4
(22) Date of filing: 03.06.1991
(51) Int. Cl.: B29C 47/06, B29C 47/26, B29C 47/92, A23G 3/02, A23G 3/30, A23P 1/12

(54) **METHOD AND APPARATUS FOR MANUFACTURING MOLDED PRODUCT HAVING CONSTANT CROSS-SECTIONAL PATTERN**
VERFAHREN UND VORRICHTUNG ZU HERSTELLUNG EINES GEFORMTEN PRODUKTS MIT KONSTANTEM GEMUSTERTEN QUERSCHNITT
PROCEDE ET DISPOSITIF D'ELABORATION DE PRODUITS MOULES PRESENTANT UNE SECTION CONSTANTE TRANSVERSALE A MOTIF

(43) Date of publication of application: 09.06.1993
(73) Proprietor: KANEBO LTD., Sumida-ku, Tokyo 131 (JP); NISHIOKA, Yasuhiro, Osaka-shi, Osaka 535 (JP)
(72) Inventor: MURAKAMI, Sanpei, Miyakojima-ku Osaka-shi Osaka 534 (JP); HAGITA, Hidenari, Takatsuki-shi Osaka 569 (JP); YAMAZAKI, Katsuya, Kusatsu-shi Shiga 525 (JP)
(74) Representative: Wakerley, Helen Rachael
(86) International application number: JP9100766
(87) International publication number: WO9221506

(56) References cited:
- JP-A-59 005 044
- JP-A-59 164 124
- JP-A-61 135 549
- JP-A-63 188 348
- JP-B-62 028 671
- No further relevant documents disclosed

## Description

The present invention relates to a method and an apparatus for manufacturing molded product having a constant cross-sectional pattern according to the pre-characterising portions of claim 1 and claim 2 respectively. Such a pattern is not varying irrespective of sectioning position, especially, the above sectional motif patterns can be molded clearly and sharply to the minutest details thereby. The invention is also related to the manufacture of molded food but not limited to it; it finds further application in the extrusion of soap materials for a solid soap, a plastic, or make-up materials such as a lipstick.

Generally, chewing gum is colored into a color or colors, or a pattern in accordance with a product image, because chewing gum in the color of the raw material is not attractive. Such a coloring is made mainly by coloring a whole product with pigments mixed therein and then molding or by printing the surface of a chewing gum with food colors. However, it is difficult to arouse the demand simply by coloring into a unique color or a pattern when a variety of chewing gums are available now. Based upon the thought that if the industry can manufacture a chewing gum having a structure similar to the well-known "kintaro-ame" (a bar candy such that the face of Kintaro, a famous folk story character, appears without fail irrespective of sectioning position), it will certainly attract the customer's interest and motivate them to purchase chewing gums, the present applicants invented the method for forming a pattern in a stable condition at all times and already applied to the Japanese Patent Office (Japanese publication No. 63-188348).

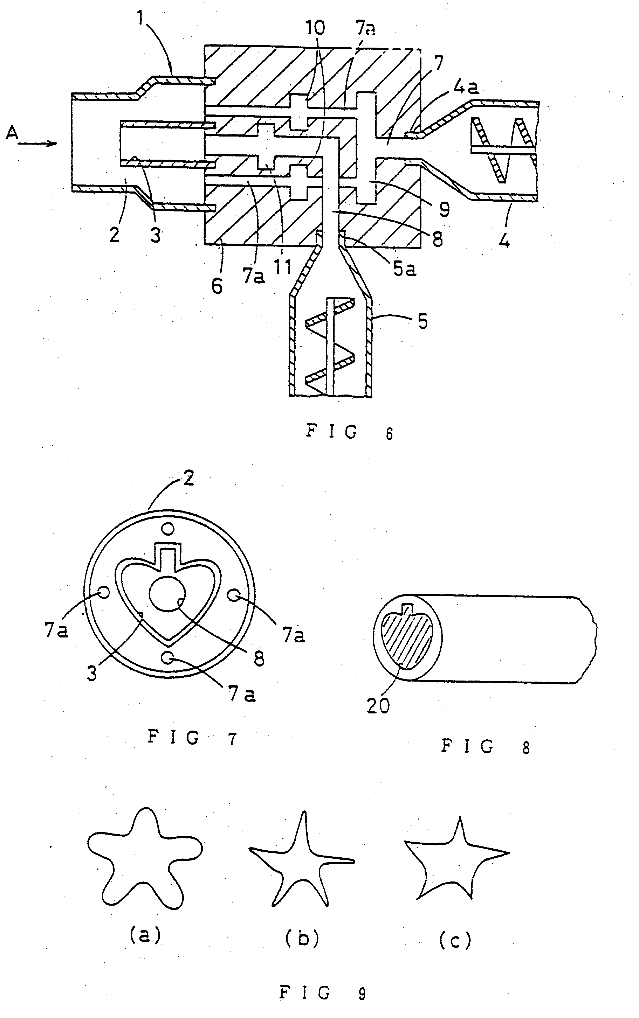

This method, over which the present invention is characterised, is to manufacture a bar of chewing gum having a sectional pattern on all planes of section perpendicular to the longitudinal axis by a special die of a extrusion molding machine, for example, shown in Fig. 6 or Fig. 7, a view of Fig. 6 as the direction of arrowmark A. In these views, 1 represents a die and in its discharge section 2 a forming cylinder 3 having an opening in the shape of a spade is disposed with its axis in parallel relation to the axis of said die 1. A base 6 connected with two units of extrusion molding machines 4 and 5 rearwardly is installed in the inner part of said die 1. A passageway 7 with one end communicated with the discharge section 4a of the above extrusion molding machine 4 and the other end opened to the outer part of the forming cylinder 3 in the discharge section, and a passageway 8 with one end communicated with the discharge section 5a of the above extrusion molding machine 5 and the other end opened to the inner part of the forming cylinder 3 are arranged in this base 6. A part directly connected with the discharge section 4a of the extrusion molding machine 4 in the above passageway 7 is merging with a cylindrically expanded portion 9 of large diameter wherein four small-diameter cylindrical passageways 7a branch off toward downstream. Said each small-diameter passageway 7a is enlarged in its intermediate portion to form a cylindrically expanded portion 10. On the other hand, the passageway 8 is enlarged in its intermediate position to form a cylindrically expanded portion 11.

Therefore, according to this apparatus, a constant flow of the forming material of a chewing gum for the outer periphery is supplied from the above extrusion molding machine 4 into the passageway 7 and, at the same time, the flow of chewing gum differing in color is supplied into the passageway 8 is also made constantly so as to continuously manufacture a bar of chewing gum which presents a spade-shaped sectional pattern 20, shown in Fig. 8.

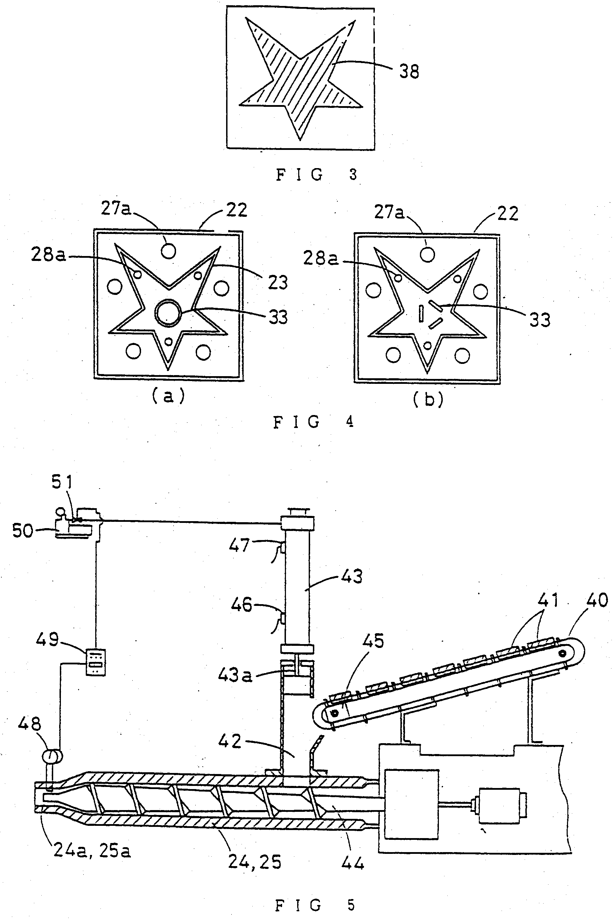

It was found out, however, that in case of a sectional motif pattern with any detailed acute angle such as a star shape, shown in Fig. 3, a complete acute-angled pattern could not be formed as shown in Fig. 9 (a) and (b) since the forming material did not reach the end parts of such an acute angle. Then, it was thought that the pressure on a forming material by a extrusion molding machine was heightened to obtain a clear acute-angled pattern. However, it was found out that the balance with the outer periphery of the sectional pattern became worse and the sectional pattern was easy to deform as shown in Fig. 9 (c).

JP 59-005044 and JP 59-164124 disclose ways in which the operation of an extruder may be controlled.

It is, therefore, an object of the present invention to provide a method and an apparatus for molded product with clear sectional motif patterns in the proper condition, irrespective of sectioning position.

In a first aspect, the present invention provides a method of manufacturing molded product having a constant cross-sectional pattern using a die extrusion unit including a discharge section and, disposed therein, a forming cylinder having an opening with a pre-determined configuration, the axis of the forming cylinder being aligned approximately parallel to the axis of the discharge section, feeding material into the discharge section around the outer periphery of the forming cylinder through a first plurality of cylindrical passages, each having an expanded intermediate portion, while feeding material into the forming cylinder. The method of the invention is characterised in that material is fed to the forming cylinder through a second plurality of cylindrical passages, each having an expanded intermediate portion, and in that the flow of material into the forming cylinder is blocked near to the central axis of the forming cylinder so that material is spread towards the outer periphery of the forming cylinder. In a second aspect, the invention provides an apparatus for manufacturing molded product having a constant cross-sectional pattern which comprises a die extrusion unit including a discharge section and, disposed therein, a forming cylinder having an opening with a pre-determined configuration, the axis of the forming cylinder being aligned approximately parallel to the axis of the discharge section, a first supply means for supplying material to the discharge section around the outer periphery of the forming cylinder through a first plurality of cylindrical passages each having an expanded intermediate portion, a second supply means for supplying material to the forming cylinder. The apparatus of the invention is characterised in that the second supply means supplies material to the forming cylinder through a second plurality of cylindrical passages each having an expanded intermediate portion and the apparatus further comprises blocking means for adjusting the spreading of material in the forming cylinder, the blocking means being positioned in the forming cylinder surrounded by the second plurality of cylindrical passages. In a further embodiment of, the invention there is provided such an apparatus in which the first and second supply means each comprise an extruder, means for supplying material intermittently into a receiving portion of the extruder, means linked to the intermittent supply means for forcing material into the extruder, means for detecting the forcing power as it varies with time, and means for adjusting the forcing power in accordance with changes in the detected values.

That is, in this invention, material for the outer periphery and for the pattern is supplied through a plurality of cylindrical passages having expanded intermediate portions and furthermore the flow of material into the forming cylinder is adjusted by blocking it near to the central axis. Therefore, according to this invention, it is possible to form a clear and sharp pattern by extruding a pattern forming material uniformly into details of patterns having acute angles such as a star shape, a character and a characteristic pattern. Besides, this pattern is always same and never deforms.

### BRIEF DESCRIPTION OF THE DRAWINGS

Fig. 1 is a cross-sectional view showing the manufacturing apparatus used in the method of this invention,
Fig. 2 is a view of Fig. 1 as viewed from the direction of arrowmark B,
Fig. 3 is a perspective view showing the molded product according to this invention,
Fig. 4 (a) and (b) are explanatory views of modified projection tips used in said apparatus;
Fig. 5 is an explanatory view of means for supplying in combination with said apparatus,
Fig. 6 is a cross-section view of the manufacturing apparatus prior to this invention,
Fig. 7 is a view of Fig. 6 as viewed from the direction of arrowmark A,
Fig. 8 is a perspective view showing the molded product according to said apparatus prior to this invention and
Fig. 9 (a), (b) and (c) are explanatory views showing defects of said apparatus prior to this invention.

The following examples and comparative examples are further illustrative of the invention.

### EXAMPLE

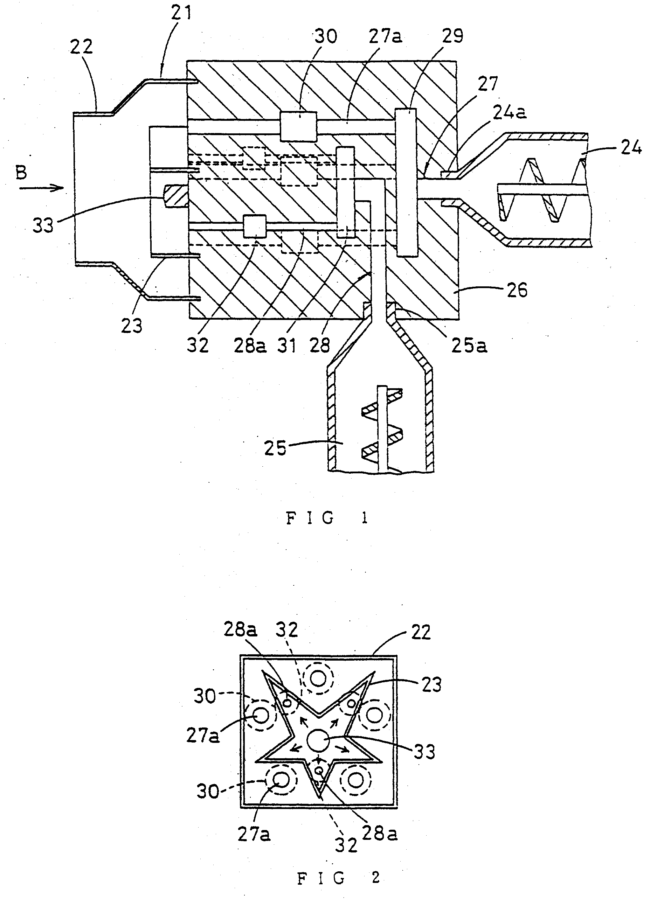

Figs. 1 and 2, as viewed from the direction of arrowmark B, show the essential components of the manufacturing apparatus for use in the method of the invention. In these views, 21 represents a die and in its square cylindrical discharge section 22, a forming cylinder 23 having an opening in the shape of a star is disposed with its axis in parallel relation to the axis of said die 21. The inner part of said die 21 is rearwardly installed with a base 26, wherein a couple of extrusion molding machines 24 and 25 are disposed with their axes oriented perpendicular to each other. In this base 26, a passageway 27 with one end communicated with the discharge section 24a of the above extrusion molding machine 24 and the other end opened to the outer part of the forming cylinder 23 in the discharge section 22 of die 21, and a passageway 28 with one end communicated with the discharge section 25a of the above extrusion molding machine 25 and the other end opened to the inner part of the forming cylinder 23 are arranged. A part directly connected with the discharge section 24a of extrusion molding machine 24 in the above passageway 27 communicated with the above extrusion unit 24 is merging with a cyindrically expanded portion 29, wherein five small-diameter cylindrical passageways 27a branch off toward downstream. Each passageway 27a is enlarged in its intermediate portion to form a cylindrically expanded portion 30. On the other hand, a part directly connected with the discharge section 25a of extrusion molding machine 25 in the above passageway 28 communicated with the above extrusion unit 25 is also merging with a cyindrically expanded portion 31, wherein three small-diameter cylindrical passageways 28a branch off toward downstream. Each passageway 28a is enlarged in its intermediate portion to form a cylindrically expanded portion 32. In addition, a cylindrical projection tip 33 is installed to adjust the flow direction in the middle part surrounded with the forming cylinder 23 in the end 26a of downstream in the above base 26.

According to the above apparatus, it is possible to manufacture molded food with sectional motif patterns, for example, in the following method. First, a chewing gum (a first material for forming the outer part), such as one in white color, is extruded from the discharge section 24a of the extrusion molding machine 24 into said passageway 27, while a chewing gum (a second material for forming the inner part), such as one in orange color, is extruded from the discharge section 25a of the extrusion molding machine 25 into said passageway 28.

The white gum discharged into the passageway 27 is delivered to a cylindrical space 29 and further each small-diameter passageway 27a in succession and is discharged from the square cylindrical discharge section 22 of a die 21 in a square cylindrical shape. On the other hand, the orange gum discharged into the passageway 28 is delivered to a cylindrical space 31 and further each small-diameter passageway 28a and is discharged from the forming cylinder 23 in the die 21 in a star shape. Thus, as shown in Fig. 3, it is possible to manufacture the chewing gum in a square cylindrical shape, which shows a star-shaped sectional pattern 38 surrounded with the white gum of the outer periphery, irrespective of the position of slicing.

In this apparatus even if the forming material fed from each extrusion molding machine 24 and 25 caused a variation in the supply, the variation is absorbed by said cylindrical space 29, 31 in a large diameter set in each passageway 27, 28, and each expanded portion 30, 32. Furthermore, since each passageway 27, 28 is not only one passageway, but is divided into a plurality of passageways 27a, 28a in the downstream, the forming material is supplied diversely from a plurality of passageways into the discharge section 22. Therefore, even if the border portion between the white gum to form the outer periphery, and the orange gum to form the pattern is complicated and uneven, the forming material can be supplied finely along with this uneven border part. However, regarding the above plurality of small-diameter passageways 27a, 28a, their positions and numbers should be established in accordance with the pattern to be manufactured. In addition, the flow of the above orange gum, which originally flows in parallel relation to the axis of die when it passes in the forming cylinder 23, is blocked by the projection tip 33, the means for adjusting the above flow direction, so that it can spread from the central part to the outer periphery as shown in Fig. 2 and, as a result, it can be extruded in a state with a gum supplied fully to every nook and corner of an acute-angled star shape. In cooperation with these functions, an extremely clear star-shaped sectional motif patterns can be materialized.

In the above embodiment, chewing gums differing in color are adopted for the pattern forming materials, but the pattern-forming material is not limited to such chewing gums but may be the combination of a variety of elastic confectionery materials, which can be formed by extrusion. For example, confectionery materials such as a soft candy, a pastry in general, a pastry for baked confectionery, jelly for so-called "Gumi-jelly" and the like, and soap materials for a solid soap, a plastic, or make-up materials such as a lipstick are adoptable.

Besides, in the above embodiment, a cylindrical projection tip 33 is adopted as an adjuster for spreading the flow by blocking the flow of a orange gum (the pattern forming material) in the middle part, but the shape of the projection tip 33 is not limited to such a shape, any shape may be acceptable if it can block the flow of the above gum. For example, a cylindrical shape shown in Fig. 4 (a), or a plurality of plates erected in a circle as shown in Fig. 4(b) is adoptable.

Furthermore, in order to further stabilize the volume of each material discharged, it is preferable that the volume of each discharged section 24a, 25a from each extrusion molding machine 24, 25 into die 21 should be stabilized. For this purpose, it is also preferable, for example, to use the material supply apparatus shown in Fig. 5, to detect the pressing power of each extrusion molding machine 24, 25 with time, and to adjust the extrusion volume in accordance with the above detected values. In this apparatus the forming material 41 divided into units intermittently cast into material supply portion 42 by a conveyer 40 moving in a fixed pitch. Then, the cast material 41 is fed into the extrusion molding machine 24, 25 with a fixed pressure by pushing movement of air cylinder 43 installed over this material supply portion 42 and is supplied into the above base 26 (shown in Fig. 1) by rotation of a screw 44. In addition, the pushing movement of the above air cylinder 43 and the intermittent feeding movement of the above conveyer 40 are linked to each other because a feeding movement per pitch of an automatic-feeding apparatus 45 (driven by, for example, air electromagnet or actuator), which gives an intermittent movement to the above conveyer 40 works by the indication of a read switch 46, which reads the start-up of rising of a piston 43a of the air cylinder 43. And also, a stroke of the above air cylinder 43 is adjustable in accordance with an interval between a read switch 47 which reads the start-up of falling in the upper position and the above read switch 46 installed below the read switch 47. On the other hand, a pressure detective apparatus 48 is installed in each discharged section 24a, 25a of extrusion molding machines 24, 25, so that the pressing power in a pushing movement by the air cylinder 43 is withdrawn as electrical signal with time and inputted into a control panel 49. The control panel 49, wherein a proper pressing power is memorized in advance, adjusts the pressing power of the air cylinder 43 by varying the degree of opening of an air supply valve 51 of a compressor 50, which supplies air into said air cylinder 43 in comparison of detected values and memorized values. Accordingly, the pressing power of the extrusion molding machine 24, 25 can be always maintained at a fixed level. For example, in case of adopting a diaphragm type pressure detection apparatus 48, the variation of the pressing power in the discharged section 24a, 25a becomes the difference of displacement, causes the difference in electric capacity with fixed electrode, and then this difference in electric capacity is converted and magnified in an electric circuit so that an output signal can be obtained. This output signal is input to the above control panel 49 so that the degree of opening of the air supply valve 51 can be adjusted in accordance with this value. Therefore, the supply of materials by the extrusion molding machine 24, 25 can be stabilized further. In addition, in this apparatus, air pressure pressed on the air cylinder 43 is so important to supply stably materials into extrusion molding machines 24, 25, that the pressure should be established as considering the balance between the load perpendicularly downward of materials filled in the material supply portion 42 and resistance force caused in case of bite of screw 44. For example, when an elastic confectionery such a chewing gum is used in the above embodiment, it is preferable that the mass per unit time should be fixed at 1 to 7kgs/minute, air pressure at 0.98 to 4.9 bar (1 to 5 kgf/cm²) and rotating speed of screw 44 at 2 to 4rpm from the point of a stable supply. Furthermore, the method to cast the material to the supply portion 42 is not limited to the above conveyor system. In addition, means for forcing pressure is not limited to the above air cylinder 43, but also the other suitable means for forcing pressure can be adoptable.

## Claims

1. A method of manufacturing molded product having a constant cross-sectional pattern using a die extrusion unit including a discharge section (22) and, disposed therein, a forming cylinder (23) having an opening with a pre-determined configuration, the axis of the forming cylinder (23) being aligned approximately parallel to the axis of the discharge section (22), including feeding material into the discharge section (22) around the outer periphery of the forming cylinder (23) through a first plurality of cylindrical passages (27a), each having an expanded intermediate portion (30), whilst feeding material into the forming cylinder (23), characterised in that the material fed into the forming cylinder (23) is fed through a second plurality of cylindrical passages (28a), each having an expanded intermediate portion (32), and in that the flow of material into the forming cylinder (23) is blocked near to the central axis of the forming cylinder (23) so that material is spread towards the outer periphery of the forming cylinder (23).

2. An apparatus for manufacturing molded product having a constant cross-sectional pattern which comprises a die extrusion unit including a discharge section (22) and, disposed therein, a forming cylinder (23) having an opening with a pre-determined configuration, the axis of the forming cylinder (23) being aligned approximately parallel to the axis of the discharge section (22), a first supply means (24) for supplying material to the discharge section (22) around the outer periphery of the forming cylinder (23) through a first plurality of cylindrical passages (27a), each having an expanded intermediate portion (30), a second supply means (25) for supplying material to the forming cylinder (23), characterised in that the second supply means (25) supplies material to the forming cylinder (23) through a second plurality of cylindrical passages (28a), each having an expanded intermediate portion (32), and the apparatus further comprises blocking means (33) for adjusting the spreading of material in the forming cylinder (23), the blocking means (33) being positioned in the forming cylinder (23) and surrounded by the second plurality of cylindrical passages (28(a)).

3. An apparatus according to claim 2 in which the first (24) and second (25) supply means each comprise an extruder, means (40,45) for supplying material intermittently into a receiving portion (42) of the extruder, means (43) linked to the intermittent supply means (40,45) for forcing material into the extruder, means (48) for detecting the forcing power as it varies with time, and means (49) for adjusting the forcing power in accordance with changes in the detected values.

## Patentansprüche

1. Verfahren zur Herstellung eines geformten Produkts mit einem konstanten Querschnittsmuster unter Verwendung einer Matrizen-Stranpreß-Einheit (22), enthaltend einen Austrittsabschnitt und einen darin angeordneten Formungszylinder (23), der eine Öffnung mit einer vorbestimmten Konfiguration hat, wobei die Achse des Formungszylinders annähernd parallel zur Achse des Austrittsabschnittes (22) angeordnet ist, umfassend das Zuführen von Material in den Austrittsabschnitt um die äußere Peripherie des Formungszylinders (23) durch eine erste Vielzahl von zylindrischen Durchlässen (27a) hindurch, von denen jeder einen erweiterten Zwischenabschnitt (30) hat, während Material in den Formungszylinder (23) zugeführt wird, dadurch gekennzeichnet, daß das in den Formungszylinder (23) zugeführte Material durch eine zweite Vielzahl von zylindrischen Durchlässen (28a) zugeführt wird, von denen jede einen erweiterten Zwischenabschnitt (32) hat, und daß der Materialfluß in dem Formungszylinder in der Nähe der Zentralachse des Formungszylinders (23) blockiert wird, so daß das Material zur äußeren Peripherie des Formungszylinders hin ausgebreitet wird.

2. Vorrichtung zur Herstellung eines geformten Produkts mit einem konstanten Querschnittsmuster, welche eine Matrizen-Strangpreß-Einheit umfaßt, enthaltend einen Austrittsabschnitt (22) und einen darin angeordneten Formungszylinder (23), der eine Öffnung von vorbestimmter Konfiguration hat, wobei die Achse des Formungszylinders (23) annähernd parallel zur Achse des Austrittsabschnittes (22) ausgerichtet ist, ein erstes Zuführmittel (24), zur Zuführung von Material in den Austrittsabschnitt, um die äußere Peripherie des Formungszylinders (23) durch eine erste Vielzahl von zylindrischen Durchlässen (27a) hindurch, von denen jeder einen erweiterten Zwischenabschnitt (30) hat, und ein zweites Zuführmittel (25) zur Zuführung von Material zum Formungszylinder, dadurch gekennzeichnet, daß das zweite Zuführmittel (25) Material zum Formungszylinder (23) durch eine zweite Vielzahl von zylindrischen Durchlässen (28a) zuführt, von denen jeder einen erweiterten Zwischenabschnitt (32) hat, und daß die Vorrichtung weiterhin Blockierungsmittel (33), zur Einstellung der Ausbreitung von Material im Formungszylinder (23) aufweist, wobei die Blockierungsmittel in dem Formungszylinder (23) angeordnet und von der zweiten Vielzahl von Durchlässen (28a) umgeben sind.

3. Vorrichtung nach Anspruch 2, bei welcher das erste (24) und das zweite (25) Zuführmittel jedes einen Extruder, Mittel (40, 45) zur intermittierenden Zuführung von Material in ein Aufnahmeteil (42) des Extruders, Mittel (43), die mit den intermittierenden Zuführmitteln (40, 45) verbunden sind, um Material in den Extruder zu treiben, Mittel (48) zur Feststellung der sich mit der Zeit verändernden Treibkraft und Mittel (49) zur Justierung der Treibkraft, in Abhängigkeit von den Veränderungen der festgestellten Werte, aufweist.

## Revendications

1. Méthode de fabrication de produits moulés présentant une section constante transversale à motif, utilisant une unité d'extrusion comprenant une partie de déchargement (22) et, placé dans celle-ci, un cylindre de formage (23) ayant une ouverture avec une configuration prédéterminée, l'axe du cylindre de formage (23) étant signé, de façon approximativement parallèle, avec l'axe de la partie de déchargement (22), et comportant la fourniture en matériau de la partie de déchargement (22) autour de la périphérie externe du cylindre de formage (23) au travers d'une première pluralité de passages cylindriques (27a), chacun ayant une partie intermédiaire élargie (30), en même temps que la fourniture en matériau du cylindre de formage (23), caractérisée en ce que le matériau fourni au cylindre de formage est amené au travers d'une seconde pluralité de passages cylindriques (28a), chacun ayant une partie intermédiaire élargie (32), et caractérisée en ce que le flux de matériau dans le cylindre de formage (23) est bloqué près de l'axe central de ce cylindre (23), de sorte que le matériau est étalé vers la périphérie externe du cylindre de formage (23).

2. Appareil de fabrication de produits moulés présentant une section constante transversale à motif, comprenant une unité d'extrusion incluant une partie de déchargement (22) et, placé dans celle-ci, un cylindre de formage (23) ayant une ouverture de configuration prédéterminée, l'axe de ce cylindre de formage (23) étant aligné, de façon approximativement parallèle, avec l'axe de la partie de déchargement (22), un premier moyen de fourniture en matériau (24) de la partie de déchargement (22) autour de la périphérie externe du cylindre de formage (23) au travers d'une première pluralité de passages cylindriques (27a), chacun ayant une partie intermédiaire élargie (30), un second moyen de fourniture en matériau (25) du cylindre de formage (23), caractérisé en ce que le second moyen de fourniture en matériau (25) alimente le cylindre de formage (23) au travers d'une seconde pluralité de passages cylindriques (28a), chacun ayant une partie intermédiaire élargie (32), l'appareil comportant de plus des moyens de blocage (33) pour ajuster l'étalement du matériau dans le cylindre de formage (23), les moyens de blocage (33) étant placés dans le cylindre de formage (23) et entourés par la seconde pluralité de passages cylindriques (28a).

3. Appareil selon la revendication 2 dans lequel les premier (24) et second (25) moyens d'alimentation comprennent chacun une extrudeuse, des moyens (40, 45) pour fournir du matériau de manière intermittente à une partie de réception de l'extrudeuse (42), des moyens (43) liés aux moyens de fourniture intermittente (40, 45) pour pousser le matériau dans l'extrudeuse, des moyens (48) pour détecter la puissance de poussée lorsqu'elle varie dans le temps, et des moyens (49) pour ajuster cette force selon les changements dans les valeurs détectées.
